# EUROPÄISCHE PATENTSCHRIFT

(11) **EP 0 450 122 B1**
(45) Veröffentlichungstag und Bekanntmachung des Hinweises auf die Patenterteilung: **30.08.1995**
(21) Anmeldenummer: 90106532.6
(22) Anmeldetag: 05.04.1990
(51) Int. Cl.: H01G 4/38, H01G 2/04

(54) **Kondensatorbatterie mit niederinduktiver Verschaltung**
Capacitor battery with low-inductance interconnection
Batterie de condensateurs à interconnection de faible inductance

(43) Veröffentlichungstag der Anmeldung: 09.10.1991
(73) Patentinhaber: SIEMENS MATSUSHITA COMPONENTS GmbH & CO KG, 81541 München (DE)
(72) Erfinder: Utner, Ferdinand, D-8400 Regensburg (DE); Vetter, Harald Dipl.-Ing., (FH), D-7920 Heidenheim (DE)
(74) Vertreter: Fuchs, Franz-Josef, Dr.-Ing.

(56) Entgegenhaltungen:
- DE-U- 8 909 246
- FR-A- 2 520 921
- PATENT ABSTRACTS OF JAPAN, Band 13, Nr. 463 (E-833)[3811], 19. Oktober 1989;& JP-A-01 181 405

## Beschreibung

Die Erfindung betrifft eine Kondensatorbatterie mit niederinduktiver Verschaltung nach dem Oberbegriff des Patentanspruchs 1.

Eine derartige Verschaltung ist aus der JP-A-01 181 405 bekannt.

Ferner ist in der DE-U 89 09 246 eine induktionsarme Kondensatorbatterie beschrieben, bei der zur Verschaltung Metallplatten mit flächenmäßig größeren Kunststoffplatten zur Isolierung vorgesehen sind.

Durch den steigenden Einsatz von GTO-Thyristoren (Gate-Turn-Off) sowie IBGT-Schalttransistoren (insulated gate bipolar transistor) in der Leistungselektronik lassen sich Umrichter mit immer höheren Leistungen und Taktfrequenzen herstellen.

Um dabei Halbleiterausfälle zu vermeiden, ist es notwendig, die Stromkreisinduktivität, d.h. die Induktivität aller Bauelemente und deren Verschaltungen, stark zu verringern.

Deshalb muß neben dem Einsatz von niederinduktiv ausgelegten Bauelementen, z. B. Bedämpfungskondensatoren, auch die Verschaltung der Bauelemente untereinander möglichst niederinduktiv ausgelegt werden.

Bei denen zur Zeit üblichen Kondensatorbatterien werden die einzelnen Kondensatoren mit in Kabelschuhen gequetschten (Preßverbinder) und isolierten Starkstromleitungen (Rund- oder Flachkabel, meist aus Litzen- bzw. Aderleitungen) untereinander verschaltet. Bei solchen Verschaltungen laufen die Leitungen in einem größeren Abstand (z. B. im Abstand der Isolatoren bzw. Kondensatoranschlüsse) nebeneinander und haben dadurch hohe Induktivitätswerte, welche bis zu 50 % der gesamten Kondensatorbatterie-Induktivität ausmachen können.

Aufgabe der Erfindung ist es, die Induktivität der äußeren Verschaltung von einzelnen Kondensatoren zu Batterien zu minimieren, ohne daß die elektrische Sicherheit beeinträchtigt wird.

Dies Aufgabe wird durch die im Patentanspruch 1 angegebenen Maßnahmen gelöst.

Vorteilhafte Ausgestaltungen des Erfindungsgegenstandes sind in den Unteransprüchen angeführt.

Der Gegenstand der Erfindung wird anhand der folgenden Ausführungsbeispiele erläutert.

In der dazugehörenden Zeichnung zeigen
- FIG 1: eine verschaltete Kondensatorbatterie in Seitenansicht,
- FIG 2: eine Draufsicht auf die in FIG 1 dargestellte Kondensatorbatterie,
- FIG 3: eine vergrößerte Einzelheit aus FIG 1,
- FIG 4: einen in FIG 2 angeführten Schnitt durch die Kondensatorbatterie,
- FIG 5, 6: verschiedene Ausführungen von Flachbandleitern,
- FIG 7,: Flachbandleiter mit flexiblen Lappen in den Anschlußbereichen,
- FIG 8: eine Verschaltung mit Flachbandleitern gemäß FIG 7 und
- FIG 9: eine Ausführungsform mit kaschierter Leiterplatte.

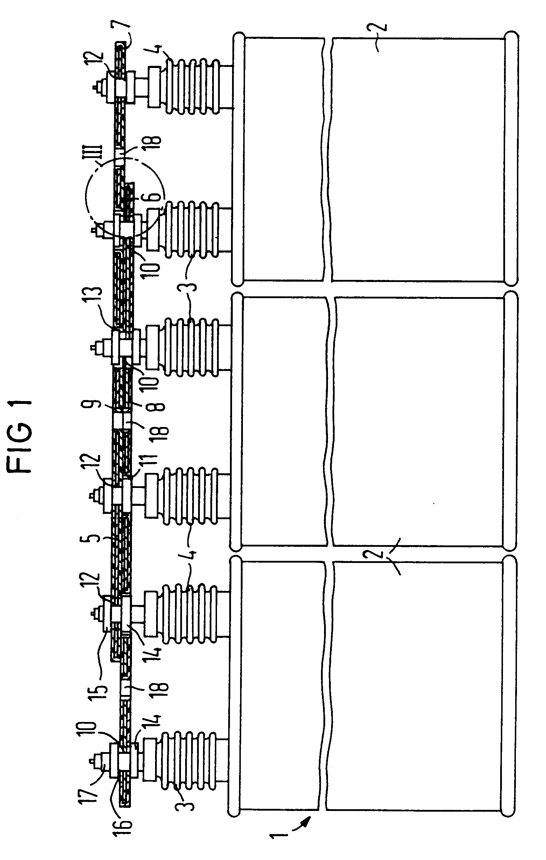

In der FIG 1 ist eine Kondensatorbatterie 1 dargestellt, die aus sechs Einzelkondensatoren 2 aufgebaut ist, von denen in der FIG 1 nur die drei vorderen sichtbar sind. Die Kondensatoren 2 besitzen jeweils zwei gegenpolige Anschlußbolzen 3, 4. Die Anschlußbolzen 3, 4 sind mittels einer Flachbandleitung 5 miteinander verbunden, wobei die Anschlußbolzen 3 mit dem Hinleiter 6 und die Anschlußbolzen mit dem Rückleiter 7 der Flachbandleitung 5 verbunden sind.

Hinleiter 6 und Rückleiter 7 sind mit Isolierschichten 8, 9 derart versehen, daß der jeweilige Anschlußbereich für die Anschlußbolzen 3, 4 frei von Isolation bleibt. Hinleiter 6 und Rückleiter 7 sind aufeinanderliegend (d.h. bifilar) geführt, wobei der Abstand zwischen Hin- 6 und Rückleiter 7 möglichst gering gehalten wird, da die Induktivität um so kleiner ist, je geringer der Abstand zwischen den beiden Leitern 6, 7 ist. Daraus folgert, daß die Bandisolationsinduktivität auch vom Aufbau und der Dicke der Isolation und somit auch vom Herstellungsverfahren beeinflußbar ist.

Die Verbindung der Flachbandleitung 5 mit den Anschlußbolzen 3, 4 erfolgt mittels Muttern und Gegenmuttern 14, 15, die unter Zwischenlegung von Beilagscheiben 16 die metallischen Teile von Hin- 6 bzw. Rückleiter 7 durch Verschraubung kontaktieren.

Zur verpolungssicheren Verschaltung sind die Bohrungen 11 bzw. 13 in den nicht zu kontaktierenden Leitern 6, 7 so groß ausgeführt, daß der Anschlußbolzen mit jeweiliger Mutter durchgesteckt werden kann, während die Bohrungen 10, 12 in den zu kontaktierenden Leitern 6, 7 nur etwas größer als der jeweilige Gewindebolzen 17 der Kondensatoranschlußbolzen 3, 4 ist. Durch die geschilderte Maßnahme wird erreicht, daß die Einzelkondendensatoren 2 verpolungssicher verschaltet werden.

Damit leitende Niederschläge auf den Isolierungen 8, 9, z.B. Verschmutzungen, keine Überschläge und Kriechströme zur Folge haben, bzw. zur Einhaltung geforderter Kriechstrecken (z.B. nach VDE) sind zwischen gegenpoligen Anschlußbolzen 3, 4 Freistanzungen 18 zur Kriechwegverlängerung in den Bandleitungen 5 angeordnet.

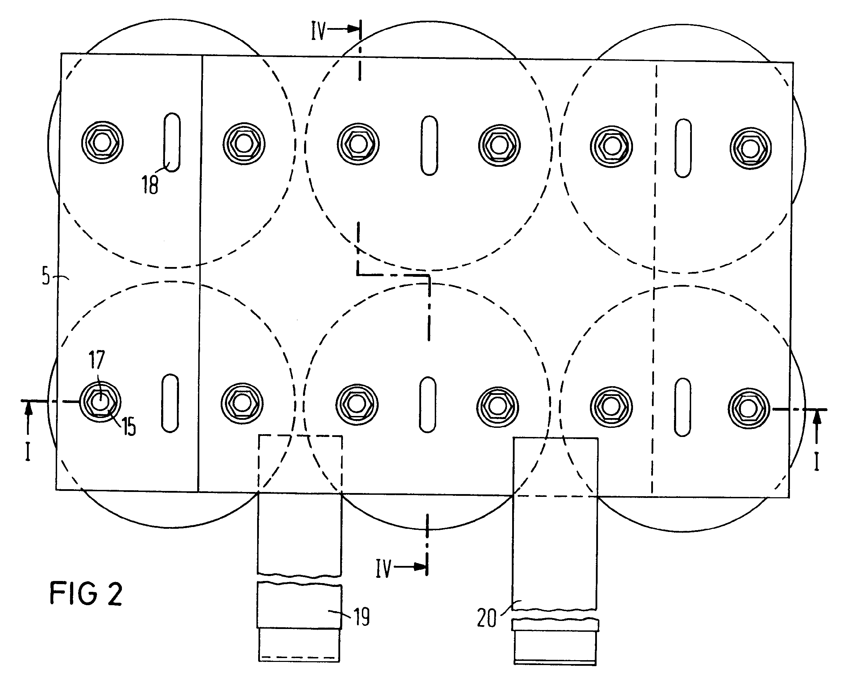

In der FIG 2 ist eine Draufsicht auf die Kondensatorbatterie mit den 6 Kondensatoren 2 dargestellt. Hieraus ist ersichtlich, daß der Flachbandleiter 5 plattenartig ausgebildet ist und einen Anschluß 19 am (in der FIG unten angeordneten) Hinleiter und einen Anschluß 20 am (oben liegenden) Rückleiter besitzt.

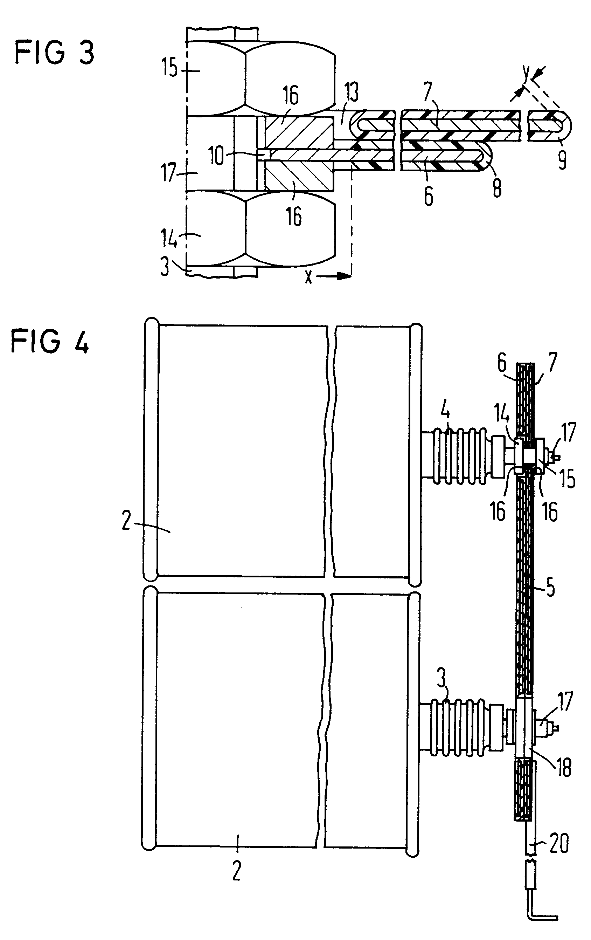

In der FIG 3 ist eine vergrößerte Einzelheit aus FIG 1 dargestellt. Es handelt sich dabei um die Verbindungsstelle eines Anschlußbolzens 3 mit dem Hinleiter 6 der Flachbandleitung 5. Hier ist zu erkennen, daß der metallische Hinleiter 6 im Bereich X der Anschlußmuttern 14, 15 frei von Isolation ist und zwischen den Beilagscheiben 16 durch die Muttern 14, 15 elektrisch und mechanisch mit dem Gewindebolzen 17 verbunden ist. Ferner ist zu erkennen, daß die Bohrung 10 im Hinleiter 6 etwas größer als der Durchmesser des Gewindebolzens 17 ist, während die Bohrung 13 im Rückleiter 7 so groß bemessen ist, daß die Muttern 14 bzw. 15 hindurchgeführt werden können.

Die Isolierungen 8, 9 des Hin- und Rückleiters 6, 7 müssen den Kantenbereich Y abdecken, damit auch bei hohen Spannungen (z. B. > 10 kV) Sprüherscheinungen bzw. Überschläge nicht auftreten können.

In der FIG 4 ist eine Seitenansicht gemäß dem in der FIG 2 dargestellten Schnitt gezeigt. Hierin ist zu erkennen, wie der Anschluß 20 für den Rückleiter ausgeführt ist.

In dem beschriebenen Ausführungsbeispiel nach den FIG 1 bis 4 sind der metallische Hin- und Rückleiter 6, 7 mit einer Kunststoffschicht 8, 9 isoliert, die aus einem Thermo- oder Duroplast besteht und durch eine Umsinterungs- oder Lackierungsprozeß auf die Leiter 6, 7 aufgebracht ist.

Die Herstellung der Umhüllungen 8, 9 geschieht entweder elektrostatisch und/oder im Pulverbad mit Pulverharzen (z.B. Epoxy- oder Polyurethan-Harzen) oder Plasten (Polypropylen, Polyamid). Da bei einer elektrostatischen Pulverbeschichtung nur relativ geringe Schichtdicken (um 50 »m pro Beschichtung) aufgetragen werden können und andererseits bei der Pulverbadbeschichtung nur geringe Kantendeckungen (z.B. 30 %) zu Bohrungen und Außenkanten des Bandleiters 5 erreicht werden können, ist es vorteilhaft, zur Erzielung gleichmäßigerer und dickerer Schichten Hin- 6 und Rückleiter 7 im vorgewärmten Zustand elektrostatisch per Pistole oder im elektrostatischen Pulverbad zu beschichten. Dadurch können gleichmäßig dicke Schichten 8, 9 bei guter Kantendeckung Y erzielt werden.

Die Vergrößerung der Kriechstrecke zwischen gegenpoligen Kondensatoranschlußbolzen 3, 4 geschieht am vorteilhaftesten durch die dargestellte Ausstanzung 18 in den Leitern 6, 7, die vor der Kunststoffbeschichtung angebracht werden.

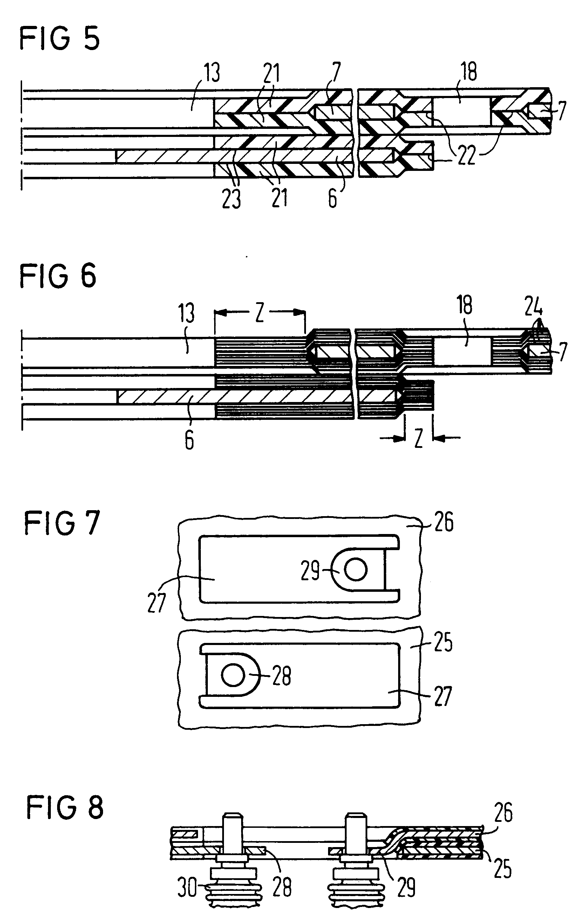

Eine weitere Möglichkeit zur Isolierung von Hin- 6 und Rückleiter 7 ist in der FIG 5 dargestellt. Hierbei werden die Leiter 6, 7 zwischen Thermoplastplatten bzw. Folien 21 (z.B. Polyamid, Polypropylen, Polycarbonat) gelegt und diese an den Außenkanten bzw. in den Bohrungen 13 oder Ausstanzungen 18 miteinander verbunden. Dies kann entweder durch ein thermisches Verschweißen (Heizstempel), Ultraschall-, Hochfrequenz-, Strahl(Laser)-Schweißen oder Verkleben geschehen, wobei die Schweiß- bzw. Klebenähte 22 entstehen. Das Fügen der Isolierplatten 21 ist günstiger, wenn - vor allem bei dickeren Bandleitungen 6, 7 - die Kunststoffplatten 21 in den zu verschweißenden Bereichen (Außenkanten, Bohrungen, Ausstanzungen) z.B. warm vorgeformt (gezogen) werden, was zu einer Vereinfachung des Schweißvorgangs führt. Außerdem können dabei eventuell benötigte Rippen zur Kriechwegsverlängerung oder Versteifung mit angeformt werden. Anstanzungen zur Kriechwegverlängerung sind ebenfalls möglich.

Durch ein Anpressen der eventuell vorgewärmten Platten 21 oder durch ein Verkleben der Kunststoffplatten 21 mit den Oberflächen 23 der Bandleitungen kann eine ggf. auftretende Spaltbildung zwischen Metall und Kunststoff verhindert werden (Erhöhung der Sprüheinsatzspannung).

Mit dieser Ausführungsform sind dicke ( > 0,3 mm) und porenfreie Isolationen kostengünstiger herstellbar als dies mit dem vorstehend beschriebenen Beschichtungsverfahren möglich ist.

Eine weitere Ausführungsform der Isolierung der Bandleiter 6, 7 ist in der FIG 6 dargestellt. Hierbei erfolgt eine Laminierung mit einer Schichtung aus Prepregs (Harzmatten) 24, die eine große mechanische Stabilität der Bandleiter 6, 7 gewährleisten. Um dabei eine porenfreie und für höhere Spannungen geeignete Isolierung zu erzielen, ist eine Laminierung bzw. Verbackung im "Autoklav-Verfahren" notwendig. Dabei wird die Laminierung durch einen mit Überdruck beaufschlagten "Gummisack" (Gummimatte) erzeugt, wobei gleichzeitig unter den Gummisack, d.h. im Bereich der Harzmatten 24, die Luft abgesaugt bzw. ein Unterdruck erzeugt wird. Hierdurch erfolgt ein Verschmelzen der Harzmatten in den Bereichen Z.

In der FIG 7 ist eine Ausführungsform von Bandleitern 25, 26 dargestellt, die im Bereich der Anschlußbolzen Ausstanzungen 27 in der Art besitzen, daß flexible Anschlußlappen 28, 29 im Anschlußbereich entstehen. Zur besseren Kenntlichmachung sind hierbei die an und für sich übereinander liegenden Bandleitungen 25, 26 nebeneinander gezeichnet.

In der FIG 8 ist dargestellt, wie die Bandleiter 25, 26 mit den Anschlußbolzen 30 eines Kondensators verbunden sind. Der Anschlußlappen 29 des oberen Leiters 26 ist dabei etwas nach unten gebogen, so daß die Anschlüsse an den Bolzen 30 ungefähr in der gleichen Ebene liegen.

Wegen der besseren Übersichtlichkeit ist die an und für sich vorhandene Isolierung der Bandleiter 25, 26 in den FIG 7 und 8 nicht eingezeichnet.

Die Ausführungsform nach den FIG 7 und 8 hat den Vorteil, daß eine Flexibilität der Anschlußbereiche der Bandleiter 25, 26 erreicht wird, so daß z.B. durch Toleranzen oder Temperaturgänge auftretende Verspannungen bzw. durch Schüttel/Stoß-Beanspruchungen der Kondensatorbatterien auftretende mechanische Belastungen nicht oder nur im stark verringerten Maße auf die mechanisch empfindlichen Keramikdurchführungen der Kondensatoren übertragen werden können. Auch hierbei ist zur Kriechwegverlängerung eine Ausbildung (Prägen, Ziehen) von Rippen in den Bandleitungen 25, 26 möglich.

Eine weitere Möglichkeit, auch bei großen bzw. dicken Leiterquerschnitten keine zu starren Verbindungen und somit mechanische Beanspruchungen der empfindlichen Keramikdurchführungen (z.B. durch Schüttel-/Stoßbeanspruchung der Batterie zu erhalten), besteht darin, die Bandleitung statt aus massivem Metall aus geschichteten Metallfolienbändern herzustellen.

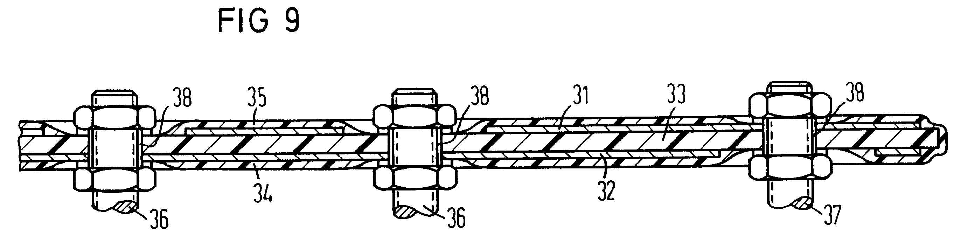

In der FIG 9 ist schließlich eine Flachbandleitung dargestellt, die für Anwendungsfälle mit kleineren Stromstärken bzw. Leiterbahnquerschnitten geeignet ist. Hierbei besteht die Flachbandleitung aus einer beidseitig mit Kupferfolien 31, 32 kaschierten (mittels Klebe- oder Warmprägekaschierung) Kunststoffplatte 33, die z.B. aus Hartpapier bzw. Epoxid-, Phenolharz- oder Thermoplastplatten besteht.

Die Isolation der Leitungsbahnen 31, 32 kann dann in derselben Weise wie bei Metallbandleitungen aus Kupfer erfolgen. D.h. die Kupferflächen 31, 32 werden mit Isolierungen 34, 35 versehen. Dies geschieht entweder durch eine Beschichtung mit Harzen oder Plasten (umsintert, lackiert) oder warmverbackenen bzw. aufgeklebten Kunststoffplatten bzw. Folien oder verbackenen Prepregs (Harzmatten z.B. aus Epoxid- oder Polyurethanharzen).

Die Verlängerung von Kriechwegen zwischen den einzelnen Anschlüssen 36, 37 kann ebenfalls wie bei den Metallbandleitungen durch Ausstanzungen erzielt werden.

Zum Herstellen der Verbindungen mit den Kondensatoranschlüssen 36, 37 sind Bohrungen 38 in der Kunststoffplatte 33 angeordnet. Im Bereich der Bohrungen 38 ist die jeweils nicht zu kontaktierende Kupfermetallschicht 31 bzw. 32 entfernt, was beispielsweise durch Ätzung oder Fräsung geschehen kann.

In den Ausführungsbeispielen wurde die Verschaltung der Kondensatoren bzw. der Bandleitungsaufbau als Parallelschaltung beschrieben und dargestellt.

Der gleiche Bandleitungsaufbau ist auch für in Serie, Stern oder Dreieck geschaltete Kondensatoren bzw. Batterien möglich.

Ferner ist es möglich, statt der dargestellten Schraubverbindungen der Kondensatoranschlußbolzen mit den Bandleitungen die Anschlüsse durch Einlöten von Kondensatoren mit z.B. Draht- oder Fahnenanschlüssen herzustellen.

## Patentansprüche

1. Kondensatorbatterie mit niederinduktiver Verschaltung, bei der die Verschaltung als isolierte Flachbandleitung (5) ausgeführt ist, bei der Hin- (6) und Rückleiter (7) übereinander angeordnet sind und bei der die Flachbandleitung (5) direkt mit Kondensatoranschlüssen (3, 4) mechanisch und elektrisch verbunden ist,
**dadurch gekennzeichnet**, daß
die Flachbandleitung (5) mit Ausnahme der zum elektrischen Verbinden der Flachbandleitung (5) mit den Kondensatoranschlüssen (3, 4) vorgesehenen Kontaktflächen allseitig mit einer Isolierung (8, 9) bedeckt ist, die auch den Kantenbereich (8) abdeckt, und daß zur Verlängerung der Kriechstrecke Ausstanzungen (18) und/oder Ausprägungen in der Flachbandleitung (5) angeordnet sind.

2. Kondensatorbatterie nach Anspruch 1,
**dadurch gekennzeichnet**, daß
die Flachbandleitung (5) mit den Kondensatoranschlüssen (3, 4) verschraubt ist.

3. Kondensatorbatterie nach Anspruch 1,
**dadurch gekennzeichnet,** daß
die Flachbandleitung (5) mit den Kondensatoranschlüssen (3, 4) mittels Draht- oder Fahnenanschlüssen verlötet ist.

4. Kondensatorbatterie nach Anspruch 2,
**dadurch gekennzeichnet**,
daß das Verschrauben mittels Anschlußmuttern (14, 15) erfolgt, daß die Flachbandleitung (5) Bohrungen (11, 13) besitzt zum Verschrauben der Flachbandleitung (5) mit den Kondensatoranschlüssen (3, 4), daß die Bohrungen (11, 13) in Hin- (6) und Rückleiter (7) unterschiedliche Durchmesser aufweisen und abwechselnd eine Bohrung an den Kanten isoliert und die andere im Bereich der Anschlußmuttern (14, 15) frei von Isolation ist.

5. Kondensatorbatterie nach einem der Ansprüche 1 bis 4,
**dadurch gekennzeichnet**, daß
die Flachbandleitung (5) zur Isolierung zwischen Isolierplatten oder Folien (21) angeordnet ist, die mit Ausnahme der Kontaktflächen an den Schnittkanten verschweißt, verschmolzen und/oder verklebt sind.

6. Kondensatorbatterie nach einem der Ansprüche 1 bis 4,
**dadurch gekennzeichnet**, daß
die Flachbandleitung (5) zur Isolierung zwischen Harzmatten (24) angeordnet ist, die mit Ausnahme der Kontaktflächen an den Schnittkanten miteinander verbacken und/oder verschmolzen sind.

7. Kondensatorbatterie nach Anspruch 1,
**dadurch gekennzeichnet**, daß
die Schnittflächen der Ausstanzungen (18) durch Verschweißung, Verschmelzung, Verbackung und/oder Verklebung der Isolierung isoliert sind.

8. Kondensatorbatterie nach einem der Ansprüche 1 bis 7,
**dadurch gekennzeichnet**, daß
die Flachbandleitung (5) aus isoliertem massivem Metall besteht.

9. Kondensatorbatterie nach einem der Ansprüche 1 bis 7,
**dadurch gekennzeichnet**, daß
die Flachbandleitung (5) aus isolierten geschichteten Metallfolienbändern besteht.

10. Kondensatorbatterie nach einem der Ansprüche 1 bis 7,
**dadurch gekennzeichnet**, daß
die Flachbandleitung (5) aus ein- oder beidseitig kupferkaschierten Kunststoffplatten besteht und daß die Kupferkaschierung mit Ausnahme der Kontaktflächen allseitig mit einer Kunststoffschicht beschichtet ist.

## Claims

1. Capacitor bank with low-inductance interconnection, in which the interconnection is designed as an insulated ribbon cable (5) in the case of which outgoing conductors (6) and return conductors (7) are arranged one above the other and in the case of which the ribbon cable (5) is directly connected to the capacitor terminals (3,4) mechanically and electrically, characterized in that with the exception of the contact surfaces provided for the purpose of the electrical connection of the ribbon cable (5) to the capacitor terminals (3,4) the ribbon cable (5) is covered on all sides with an insulation (8,9) which also covers the edge region (8), and in that punched-out holes (18) and/or stamped-out holes are arranged in the ribbon cable (5) for the purpose of lengthening the creepage distance.

2. Capacitor bank according to Claim 1, characterized in that the ribbon cable (5) is screwed to the capacitor terminals (3,4).

3. Capacitor bank according to Claim 1, characterized in that the ribbon cable (5) is soldered to the capacitor terminals (3,4) by means of wire leads or lugs.

4. Capacitor bank according to Claim 2, characterized in that the screwing is performed by means of terminal nuts (14,15), in that the ribbon cable (5) has bores (11,13) for the purpose of screwing the ribbon cable (5) to the capacitor terminals (3,4), and in that the bores (11,13) in the outgoing conductors (6) and return conductors (7) have different diameters and alternately one bore is insulated at the edges and the other is free from insulation in the region of the terminal nuts (14,15).

5. Capacitor bank according to one of Claims 1 to 4, characterized in that the ribbon cable (5) is arranged for the purpose of insulation between insulating plates or foils (21) which with the exception of the contact surfaces are welded, fused and/or bonded to the edges of the cut.

6. Capacitor bank according to one of Claims 1 to 4, characterized in that the ribbon cable (5) is arranged for the purpose of insulation between resin impregnated glass mats (24) which with the exception of the contact surfaces are baked and/or fused to one another at the edges of the cut.

7. Capacitor bank according to Claim 1, characterized in that the cut surfaces of the punched-out holes (18) are insulated by welding, fusing, baking and/or bonding insulation.

8. Capacitor bank according to one of Claims 1 to 7, characterized in that the ribbon cable (5) comprises insulated solid metal.

9. Capacitor bank according to one of Claims 1 to 7, characterized in that the ribbon cable (5) comprises insulated laminated metal foil strips.

10. Capacitor bank according to one of Claims 1 to 7, characterized in that the ribbon cable (5) comprises plastic sheets which are copper-clad on one or both sides, and in that with the exception of the contact surfaces the copper cladding is coated on all sides with a plastic layer.

## Revendications

1. Batterie de condensateurs en montage à faible inductance et dans laquelle les interconnexions sont réalisées sous la forme d'un conducteur isolé en forme de ruban (5), et dans laquelle le conducteur aller (6) et le conducteur de retour (7) sont disposés l'un au-dessus de l'autre, le conducteur en forme de ruban (5) étant relié mécaniquement ou électriquement directement aux bornes (3,4) des condensateurs, caractérisée par le fait que le conducteur en forme de ruban (5) est recouvert de tous côtés, hormis au niveau des surfaces de contact prévues pour la liaison électrique du conducteur en forme de ruban (5) avec les bornes (3,4) des condensateurs, par un isolant (8,9), qui recouvre également la zone (8) du bord, et que pour allonger la section de fuite, des découpes (18) et/ou des moulures sont formées dans le conducteur en forme de ruban (5).

2. Batterie de condensateurs suivant la revendication 1, caractérisée par le fait que le conducteur en forme de ruban (5) est vissé aux bornes (3,4) des condensateurs.

3. Batterie de condensateurs suivant la revendication 1, caractérisée par le fait que le conducteur en forme de ruban (5) est soudé aux bornes (3,4) des condensateurs au moyen de bornes en forme de fils ou de languettes.

4. Batterie de condensateurs suivant la revendication 2, caractérisée par le fait que le vissage est réalisé à l'aide d'écrous de raccordement (14,15), que le conducteur en forme de ruban (5) comporte des perçages (11,13), pour le vissage du conducteur en forme de ruban (5) sur les bornes (3,4) des condensateurs, que les perçages (11,13) dans le conducteur aller (6) et dans le conducteur de retour (7) possèdent des diamètres différents et que, alternativement, un perçage est isolé au niveau des bords et l'autre est exempt de toute isolation dans la zone des écrous de raccordement (14,15).

5. Batterie de condensateurs suivant l'une des revendications 1 à 4, caractérisée par le fait que le conducteur en forme de ruban (5) est disposé pour réaliser l'isolation entre des plaques isolantes ou des feuilles (21), qui, hormis au niveau des surfaces de contact, sont soudées, fixées par fusion et/ou collées sur les bords de coupe.

6. Batterie de condensateurs suivant l'une des revendications 1 à 4, caractérisée par le fait que le conducteur en forme de ruban (5) est disposé, pour l'isolation, entre des mats de résine (24), qui, en dehors des surfaces de contact, sont fixées l'une à l'autre par cuisson et/ou fusion au niveau des bords des arêtes de coupe.

7. Batterie de condensateurs suivant la revendication 1, caractérisée par le fait que les surfaces de coupe des découpes (18) sont isolées par soudage, fixation par fusion, fixation par cuisson et/ou collage de l'isolant.

8. Batterie de condensateurs suivant l'une des revendications 1 à 7, caractérisée par le fait que le conducteur en forme de ruban (5) est réalisé en un métal massif isolé.

9. Batterie de condensateurs suivant l'une des revendications 1 à 7, caractérisée par le fait que le conducteur en forme de ruban (5) est constitué par des bandes de feuilles métalliques isolées et empilées.

10. Batterie de condensateurs suivant l'une des revendications 1 à 7, caractérisée par le fait que le conducteur en forme de ruban (5) est constitué par des plaques en matière plastique possédant une plaquette en cuivre sur une face ou sur leurs deux faces, et que le placage en cuivre est recouvert de tous côtés, à l'exception des surfaces de contact, par une couche de matière plastique.
